# EUROPEAN PATENT APPLICATION

(11) **EP 1 679 867 A1**
(43) Date of publication of application: **12.07.2006**
(21) Application number: 05290038.8
(22) Date of filing: 06.01.2005
(51) Int. Cl.: H04M 3/493, G10L 15/26

(54) **Customisation of VoiceXML Application**

(71) Applicant: Orange SA, 75505 Paris Cedex 15 (FR)
(72) Inventor: Shienbrood, Eric R., Sudbury, MA 01776 (US); Pelland, David M., Bolton, MA 01740 (US); Howe, Gregory T., Brookline, MA 02446 (US); Adamsky, Robert P., Andover, MA 01810 (US)
(74) Representative: DeVile, Jonathan Mark

(57) **Abstract**

A speech applications server is arranged to provide a user driven service in accordance with an application program in response to user commands for selecting service options. The user is prompted by audio prompts to issue the user commands. The application program comprises a state machine operable to determine a state of the application program from one of a predetermined set of states defining a logical procedure through the user selected service options, transitions between states being determined in accordance with logical conditions to be satisfied in order to change between one state of the set and another state of the set. The logical conditions include whether a user has provided one of a set of possible commands. A prompt selection engine is operable to generate the audio prompts for prompting the commands from the user in accordance with predetermined rules. The prompt selected by the prompt selection engine is determined at run-time. Since the state machine and the prompt selection engine are separate entities and the prompts to be selected are determined at run-time, it is possible to effect a change to the prompt selection engine without influencing the operation of the state machine, enabling different customisations to be provided for the same user driven services.

## Description

### Field of the Invention

This invention relates to an applications server operable to provide a user driven service in accordance with an application program. The invention also relates to a method for providing a user driven service, the service being provided in response to user commands for selecting service options. The invention also relates to an application program operable to provide a user driven service in response to user commands for selecting service options.

### Background of the Invention

Services provided on an applications server may be accessed by a user in response to user commands issued by the user. The services may be provided over a network, for instance a mobile network including a server, and could include, for example, services such as initiating a telephone call, retrieving voicemail or sending and retrieving text or picture messages. User commands may take a number of different forms. For instance, users may be able to issue a command by pressing a button or a series of buttons on a keypad of a user terminal such as a mobile telephone. Alternatively, the user may be able to issue a command by navigating and selecting menu items on a graphical user interface of a user terminal, or by providing a voice command. The services may be accessed using a set of dialogs conducted between a user and an application program provided on an applications server. The applications server may communicate with the user via a set of audio prompts tailored to the information required from the user. The user can, in response to these prompts, supply the applications server with commands.

### Summary of Invention

According to a first aspect of the invention, there is provided a speech applications server operable to provide a user driven service in accordance with an application program. The application program is arranged to provide the service in response to user commands for selecting service options, the user commands being prompted by audio prompts. The application program comprises a state machine operable by a state machine engine to determine a state of the application program from one of a predetermined set of states defining a logical procedure through the user selected service options, transitions between states being determined in accordance with logical conditions to be satisfied in order to change between one state of the set and another state of the set. The logical conditions include whether a user has provided one of a set of possible commands. The application program further comprises a set of prompt selection rules operable by a prompt selection engine to generate the audio prompts for prompting the commands from the user in accordance with predetermined rules, wherein the prompt selected by the prompt selection engine is determined at run-time.

In accordance with this first aspect, by providing that the state machine and the prompt selection rule set are separate entities, it is possible to effect a change to the set of rules defining a dialogue from the prompt selection engine for a particular service in a manner which is independent from the operation of the state machine. That is, different customisations can be provided by different sets of rules for defining the dialogues, which are applied to the prompt selection engine to be used in providing services to different users in accordance with their needs, without requiring a correspondingly customised state machine to be provided. For example, users of the service within different countries or localities may be provided with specific audio prompts from a set of rules for the prompt selection engine, which have a specific customisation tailored to the local languages and dialects of the users of the service within that locality. The predetermined rules used by the prompt selection engine may simply be a one-to-one mapping of a state determined by the state machine to a given voice prompt, or alternatively a given state determined by the state machine may correspond to a number of possible prompts, the actual prompt chosen being selected on the basis of the predetermined rules.

Providing a separate prompt selection rule set is advantageous compared to an alternative approach in which a customisation of the service simply involves recording a new set of audio prompt files, which may not be sufficient for an alternative language customisation or other complex customisation. Further, the present invention is preferable to an alternative approach in which a customisation of the service involves providing a modified state machine for each customisation. This results in onerous maintenance requirements, since any changes in service logic (e.g. dialog flow, addition of new dialogs or bug fixes) require developers to apply the changes to every customisation of the service. Further, customers are unlikely to be allowed access to the state machine of the service, and will therefore be unable to create customisations themselves.

In contrast, embodiments of the invention allow customisations to be developed without any alteration to the service logic, so there can be a single code base for the service. Customisations of the service can be deployed (or removed) without redeploying the service and can be developed and deployed independently from each other. Thus customisations will not introduce bugs to the service itself or to existing customisations. In addition, because customisation development is separate from service development, an operator (or other customer) may be provided with the capability to create its own customisations, with prompt selection reflecting brand values or any other criteria they desire without having to wait for their service vendor to release a new version of the service.

The present approach stands in contrast to the typical practice for localizing non-speech applications using message catalogues. Message catalogues contain all the text strings used by an application. These text strings are extracted from the application and replaced with index keys, each of which points to the message catalogue entry containing the extracted text. Creating a new localization for an application is then a matter of creating a new message catalogue. Note the analogy to a speech application in which the collection of prompt audio recordings can be replaced. While a one-for-one substitution of audio prompt files is possible with this traditional approach, a change in the dialogue format and structure is not achievable.

According to one embodiment of the invention, the speech applications server comprises a command recognition engine. The command recognition engine includes a speech recogniser which is operable to provide the command recognition engine with a set of possible user commands which may be received from the user for changing from a current one of the predetermined set of states to another of the states to which the state machine may change. The command recognition engine is operable to analyse the user commands and the possible commands provided by the speech recogniser to provide the state machine engine with an estimate of one of the possible commands which the user provided. The state machine engine is operable to change state in response to the estimated user command.

According to this embodiment, a set of possible user commands which can be recognised and acted upon by the server are specified by the grammar rules and are used by the command recognition engine in a process of identifying possible commands which are deemed a likely match to the user inputted commands. The set of commands issued to the command recognition engine acts as a constraint to the number and type of user command estimates that can be provided by the command recognition engine and focuses the task of the command recognition engine on relevant commands only. Either a single user command estimate may be provided, or alternatively a plurality of user command estimates may be provided. The state machine engine is operable to use these estimates to determine an appropriate state transition.

In addition to providing an estimate of the user commands, the speech recogniser may also be operable to provide confidence levels corresponding to each of the command estimates, the confidence levels indicating how likely the speech recogniser considers a user command estimate to match the inputted user command. In this case, the state machine engine determines a change of state from, for example, the estimated user command in combination with the determined confidence level.

According to another embodiment, the server is arranged to accept voice commands from the user, and in one example, all communications between the server and the user, both in terms of prompts from the server and commands from the user, may be carried out via speech dialog, advantageously providing a fluid hands-free service to the user. However, it will be appreciated that in the case of some command types for controlling the application program, spoken commands may be either unsuitable, or less expedient than non-spoken commands, such as for example providing "dialled" commands using DTMF tones. In other examples, a combination of spoken and non-spoken commands may be adapted.

According to another embodiment of the invention, the application program is operable to generate a mark-up language page in accordance with a current state of the application program as determined by the state machine, the mark-up language page including universal resource locations (URLs) defining a location for data files providing the audio prompts. The URLs may also specify grammar files, each grammar file providing a set of possible commands for the command recognition engine, some of which may be generated dynamically, whilst others may exist statically. In one example the mark-up language is VoiceXML. The use of a mark-up language to define the prompts is particularly advantageous in the context of a web-server based system.

According to other embodiments, one or more of the state machines, the prompt selection rule set and the command recognition grammars may be defined using mark-up languages.

Various further aspects and features of the present inventions are defined in the appended claims. Other aspects of the invention include a speech application system, a speech application method and an application program.

### Brief Description of the Drawings

Embodiments of the present invention will now be described by way of example only with reference to the accompanying drawings where like parts are provided with corresponding reference numerals and in which:
Figure 1 is a schematic block diagram illustrating an arrangement for deploying an audio prompted service to a user;
Figure 2 schematically illustrates a more detailed representation of one possible run-time implementation of the arrangement of Figure 1;
Figure 3 schematically illustrates an example of various possible states of an application program;
Figure 4 schematically illustrates a more detailed example of further states which may appear within one of the states of Figure 3;
Figure 5 schematically illustrates, for each of the states of Figure 4 a corresponding condition for reaching that state, a situation identifier, a prompt suggestion, an action and a next state to be reached following the present state;
Figure 6 schematically illustrates an example form of a user interface mark-up language applicable to embodiments of the present invention;
Figure 7 schematically illustrates, for each of the states of Figures 4 and 5, a corresponding condition for the prompt to be selected and an identifier of the prompt which is to be generated;
Figure 8. schematically illustrates, for an application program comprising multiple services, the selection process for state transitions between different states in a form, or between a state in one form and a state in another form in response to user commands;
Figures 9A and 9B schematically illustrate the selection of eligible state sets from among the states within forms of currently subscribed services;
Figure 10 schematically illustrates a design process for a service including customisation requirements;
Figure 11 schematically illustrates a service package and a customisation package development process using the design outputs described with reference to Figure 10.

### Description of the Example Embodiments

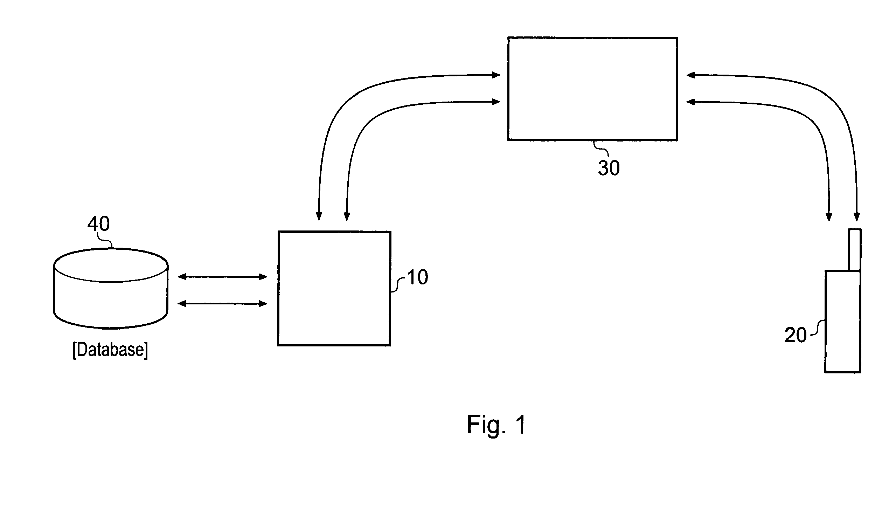

An example embodiment of the present invention will now be described with reference to a voice-activated service. Figure 1 provides a schematic block diagram illustrating an arrangement for deploying an audio prompted service to a user. The audio prompted service is provided by an application program running on a speech application server 10. The applications server 10 stores and retrieves data to and from a database 40. A user equipment 20 is arranged to communicate with a telephony platform 30. The telephony platform 30 is arranged to receive signals from the user equipment 20 representing user commands and to communicate signals representing audio prompts for communication to the user equipment, the signals being reproduced as audio prompts to the user, by the user equipment.

Embodiments of the present invention provide a facility for an audio based service, which in some examples allows a user to voice activate a service. The voice activation of the service is effected by providing voice commands in response to audio prompts for user command options. However in other examples the user commands may be provided by DTMF tones.

### System Architecture

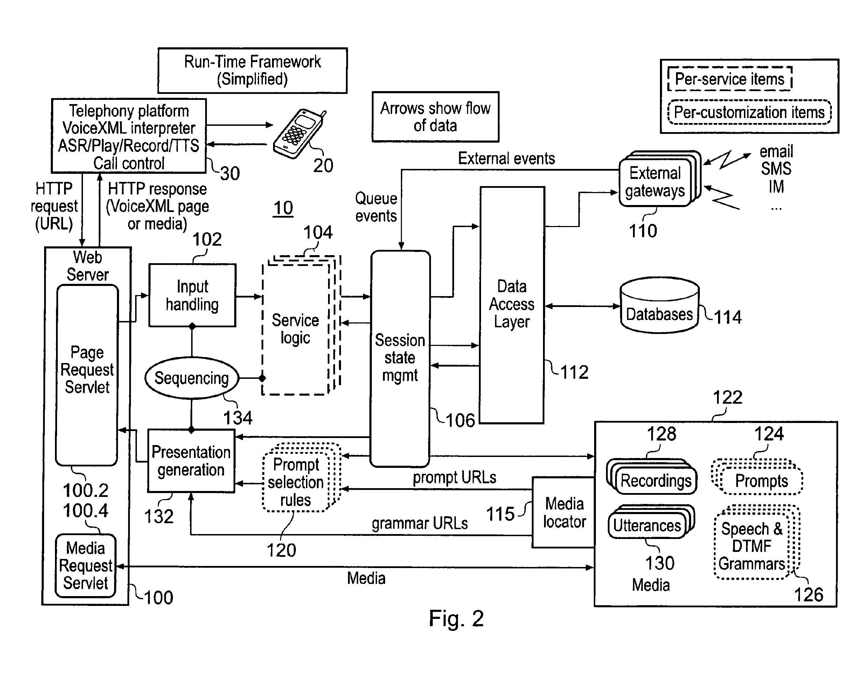

A diagram providing a more detailed representation of one possible run-time implementation of the speech applications server of Figure 1 is shown in Figure 2. In Figure 2, parts which also appear in Figure .1 haye been provided with the same reference numerals. As illustrated in Figure 2 the telephony platform 30 is arranged to receive data representing audio prompts from a web server 100 within the speech applications server 10. As will be explained shortly, the telephony platform 30 receives the data representing audio prompts in the form of VoiceXML pages which are generated by an application program running on the applications server 10.

The applications server 10 is arranged to provide a platform for running application programs for providing voice activated services to users. According to the present technique, the application program separates the rules for prompt selection from the service logic defining states of the application program, such states implementing the tasks to be performed for the user.

A set of rules run by the prompt selection engine define prompts to be generated for the user. The user responds to the prompts by uttering commands to specify the task to be performed by the service logic. An operative association between the state machine engine and the prompt selection engine is made at run time, so that the prompts to be generated for a particular state are established at run-time. As such the application program when executing on the applications server may be considered as comprising:
- a state machine defining states of the application program and conditions for changing states from one of the predetermined set of states to another, some of the states generating tasks specified by the users from user commands which serve to navigate through the states. The tasks also cause actions with various effects to be carried out, for example, sending of a message, updating an address book entry, etc.
- a prompt selection rule set defining prompts to be spoken to the user in accordance with those rules, the prompts to be generated being selected in accordance with the current state of the application program.

As shown in Figure 2 the application program when running on the applications server includes an input handling engine 102, for processing input user commands received at the web server from the telephony platform which in turn were generated by the user equipment 20. User commands processed by the input handling engine 102 are then fed to service logic 104 which provides the state machines for defining the service task. A state machine engine represented by an oval 134 runs the state machine service logic 104 defining the state machine of the application program.

As will be explained for each of the states of the application program defined by the state machine, certain actions are to be performed in accordance with the session state. A session state manager 106 is therefore arranged to access a data access layer 112 which provides to the user a facility for performing tasks in accordance with the state in the application program which has been reached. The data access layer 112 may handle certain events and may access external resources such as email, SMS or Instant Messaging messaging via an external gateway 110. The data access layer 112 may also receive external events from the external gateway 110 and forward these to the session state manager 106.

The data access layer 112 provides a facility for retrieving data from databases and other data stores. The data access layer 112 is provided with access to data stored in a database 114 and may also be provided with access to XML data resources and other data stores such as:
- LDAP user directories,
- IMAP message stores, and
- MAPI from MS exchange servers.

As mentioned above, the application program also includes a prompt selection engine 120 for selecting audio prompts for communication to the user. The audio prompts are selected by the prompt selection engine from media 122 via a media locator 115. The media resources are identified by Universal Resource Locators (URLs) which identify, amongst other things, prompts in the form of audio files 124 which are accessible by the data access layer 112. The data access layer 122 also provides access to a command recognition engine 126 which is arranged to process user received commands and to generate a confidence score indicating how confident the command recognition engine 126 is that a particular command has been issued.

The confidence scores are passed to the service logic for determining whether a logical condition for changing between one state and another has been satisfied. The data access layer 112 also provides a facility for the user to provide information in accordance with the service being provided. For example, recordings made by the user may be stored by the data access layer 112 in a recordings repository 128. In addition, spoken commands generated by the user may be stored in an utterances data store 130.

The application program also includes a presentation generator 132 which is arranged to receive data for presentation to the user from the session state manager 106 and the prompt selection engine 120. The presentation generator 132 is arranged to form data for presentation to the user, the data being deployed by the web server 100. In one example, the data for presentation to the user is in the form of a VoiceXML page which may include one or more URLs to data objects such as audio prompt files 124.

The state machine 104 of the application program is arranged to ensure that the input handling processor 102 and the presentation generator 132 are maintained in a corresponding one of the predetermined states of the application program with respect to which particular actions are performed. The state of the application program is determined for the state machines 104 by the state machine engine 134.

The web server 100 includes a page request servlet 100.2 and a media request servlet 100.4. The page request servlet 10.2 is arranged to formulate a VoiceXML page for communication to the telephony platform 30 in accordance with data received from the presentation generator 132. The telephony platform 30 interprets the received VoiceXML page in accordance with what is specified in the VoiceXML page. The telephony platform 30 accesses a media servlet 122 to obtain media data 122 in response to the VoiceXML page. The VoiceXML page may include one or more URLs, which access the media data 122 via the data access layer 112. The web server 100 also receives page requests from the telephony platform 30, in response to <submit> or <goto> elements in the VoiceXML page, which are processed by the web server 100 and returned in the form of VoiceXML pages.

As explained above, examples of the present technique provide a facility for separating service logic which defines the states of the application program for providing tasks to the user from prompt selection rules and in some examples also from the user commands which are recognised by the user command recogniser 126. As illustrated in Figure 2 those parts which are associated with providing the application program service, including the state machine engine 104, the prompt selection rules 120, the grammars for the command recogniser 126 and the prompt audio files 124 are illustrated with a dotted line border. The parts can be adapted separately from those parts with a solid line which execute the application program to perform the service such as the presentation generator 132 and the input handler 102.

As a result, a particular advantage is provided by the specification and execution of the application program in that a user command driven service may be adapted to different audio prompts in accordance with preferences of the user. For example, the user may receive audio prompts in the form of a female voice rather than a male voice if the user so prefers. In contrast, in some implementations, the service may be adapted to different languages. Accordingly, by separating the state machine defining the service logic from the prompt selection rules the same service may be deployed in different countries by simply replacing the audio prompts, adapting the prompt selection rules, and adapting the user command recogniser 126 including prompts and prompt recordings.

Such an arrangement is particularly advantageous when applied to language customisation because tailoring the user interface to a particular language does not always simply involve substituting a set of prompt recordings of one language with a set of prompt recordings of an alternative language. For instance, to create a French language version of an existing English language service, the simplest course of action would be to translate each of the English prompts into French. However, this approach will not provide a high quality French language user interface because grammatical differences between the two languages sometimes dictate different sentence structures for communicating the same concept. A prompt sequence may include a mixture of static and dynamic prompts, for example "You have six messages, of which two are new. The first message is from Fred Smith" where the underlined terms are dynamic. The full prompt is therefore composed of at least six portions, of which three are static and three are dynamic. In an alternative language these prompt sections may preferably be arranged in a different order, or alternatively a different prompt sequence may be used, depending on stylistic reasons or depending on differences in the syntactical rules of different languages. Clearly, a direct substitution of prompt recordings is unable to address these issues.

### Voice-dial Service Example

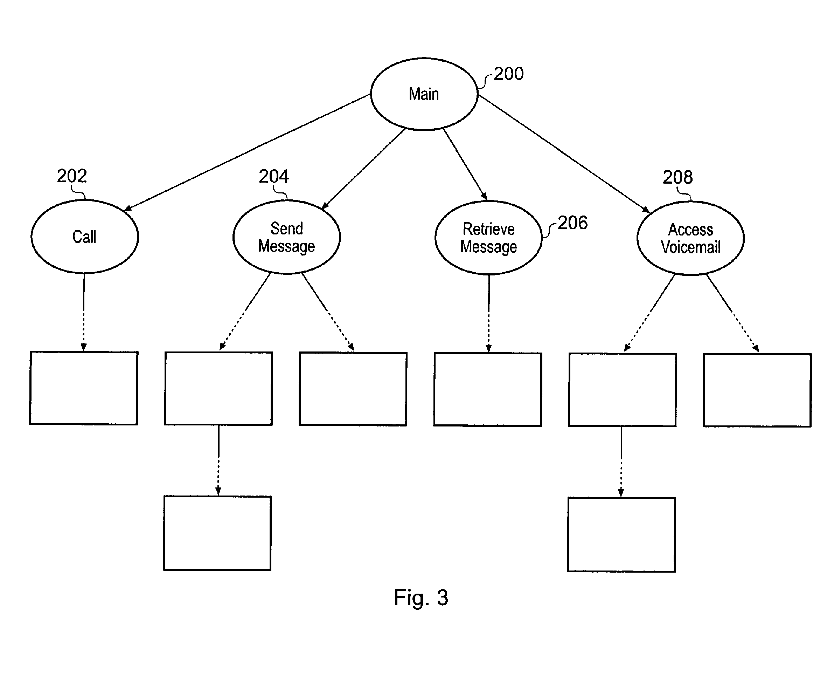

In order to illustrate advantages provided by embodiments of the present invention, an example service driven by voice activated user commands will now be explained with reference to Figures 3 to 7. As mentioned above, an application program operating in accordance with the present technique is specified as providing a plurality of states which define a sequence of actions and events which prompt a user through a menu of options for selecting a particular service. Figure 3 provides an example of various possible states of an application program. A first state labelled main 200 defines a first state in a state diagram of the application program. Below the main state 200 are options which a user can select in order to define the service which is to be performed. A first state labelled "call" 202, defines a state starting a process for calling a particular contact in the user's contact list. Other examples given are "send message" 204, "retrieve message" 206 and "access voice mail" 208 which are all states extending from the main state 200 which can be selected by the user and define a first state in a set of states specifying a task to be performed. Thus, below each first level state 202, 204, 206 and 208 a further set of states is defined which prompt user commands to request input in order to navigate to a further state in which a task specified by the user in accordance with those user commands is to be performed. Consider the example of the "call" task as specified from the first call state 202.

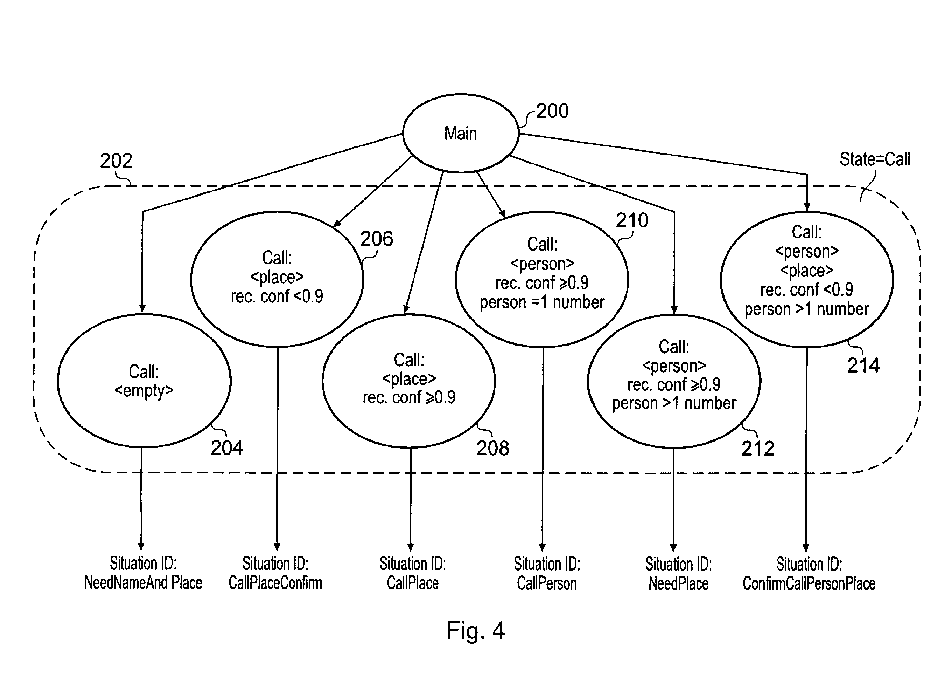

Figure 4 provides a more detailed example of further states which may appear within the call state 202. As shown in Figure 4 within the call state 202 various further states exist which may, according to one interpretation, represent sub states within the call state 202. Navigation from the main state 200 to one of the sub states will depend upon the user command provided when navigating to the call state. For example, in state 204 the user may have expressed the word "call" without specifying either the place to be called or the person to be called. Accordingly, state 204 is labelled call: <empty>. The following is a list of each of the states within the call state associated with the command issued by the user in order to reach this state:

Call: <place> 206, this state is reached if the user has specified call and "place" that is to say with a received confidence value of less than 0.9 the user specified a place where he wishes to place a call.

Call: <place> 208, this state corresponds to the call: <place> state 206 except that the confidence level returned by the user command recogniser 126 is greater than or equal to 0.9.

Call: <person> 210, this state is reached from the main state if the user uttered the word "call" followed by the person to be called where the command recogniser 126 has returned a confidence level for the confidence of detecting the person to be called of greater than or equal to 0.9 and where the person to be called has only one number, for instance a home number or a work number.

Call: <person> 212, this state is reached from the main state if the user uttered the word "call" followed by the person to be called where the command recogniser 126 has returned a confidence level for the confidence of detecting the person to be called of greater than or equal to 0.9 and where the person to be called has more than one number, for instance both a home number and a work number.

Call: <person> <place> state 214, this state is reached from the main state if the user uttered the word "call" followed by the name of a person and the name of a place where the confidence level for both the person and the place is less than 0.9.

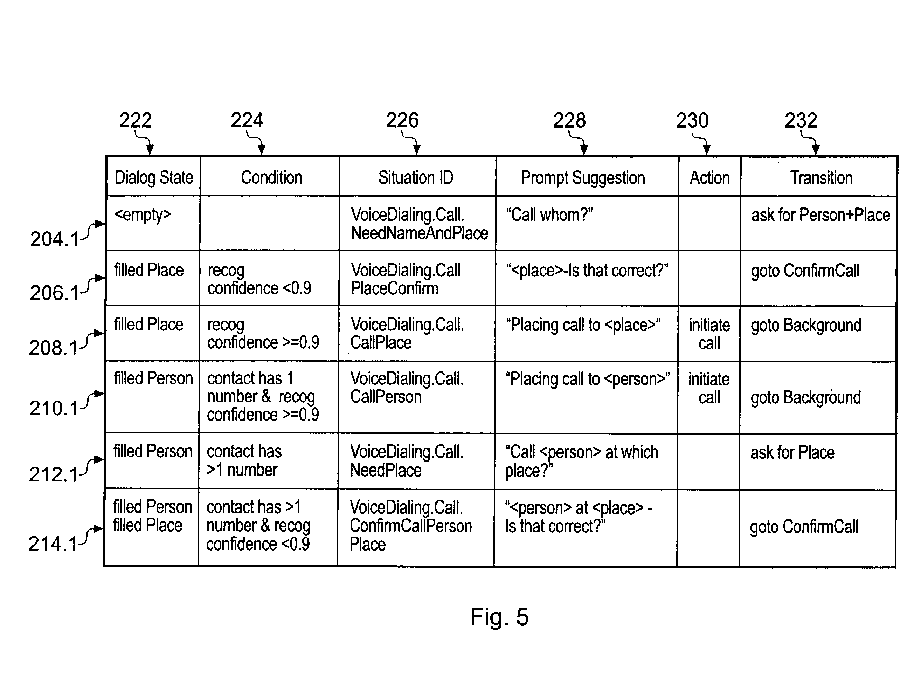

For the example illustrated in Figure 4, a table illustrated in Figure 5 provides for each of the states within the call state 202 a row defining in a first column. The first column specifies only the dialog state, that is, the set of form slots that are filled in. In a second column additional conditions for reaching that state are provided so that the state is fully defined by the logical conjunction of the first column and the second column. In a third column a situation identifier is shown to define the state by means of a unique tag. Further, the table provides, in a fourth column 208 a prompt suggestion. The prompt suggestion a guide to the person implementing the prompt selection rules, to give them a hint as to what should be said in the given situation. The prompt suggestion does not provide the prompts, which are determined at run-time according to the prompt selection rules. In the fifth column 230, an action to be performed is defined, and in the sixth column 232 instructions that set up the transition to the next dialogue state are provided. The instructions may directly specify a next state to be reached following the present state or often just specifies what grammar should be made active, which establishes a set of possible next dialogue states. It is in response to what the command recognition engine determines the user to have said that a transition takes place to the next user interface state. Thus, for example, if the call: <empty> state 204 represented as the first row 204.1 is reached then the prompt suggestion would be "call whom" the transition setup would be "ask for place and person" in order for the voice activated service to identify the person and place where the user wishes to place a call.

For the example of where the call: <place> state 206 was reached, represented as the second row 206.1, the suggested prompt would request whether the specified place was correct because the confidence that the place was recognised returned by the command recognition engine 126 was less than 0.9. Accordingly the transition setup would be to go to the "ConfirmCall" dialogue state. In contrast, if the state call: <place> 208 had been reached, represented by the third row 208.1, then because the place was recognised with greater than or equal to 0.9 confidence level, the suggested prompt would inform the user that the call was being placed to <place>, an action would be performed to initiate the call and the transition setup would be to go to the "Background" dialogue state. The background state is a state in which the application program is idle except for monitoring whether the user expresses a "wakeup" word.

For the example of where the call: <person> state 210 was reached, represented as the fourth row 210.1, the suggested prompt informs the user that the call is being placed to <person>, the action is to initiate the call to the person, and the next state is Background, because the person has been recognised with a confidence score of greater than or equal to 0.9 and there is only one available number for that person. In contrast, where the call: <person> state 212 was reached, represented as the fifth row 212.1, the suggested prompt asks the user which of the <person>'s places to, and the slot to be filled is <Place> because there is more than one number, corresponding to a particular place, associated with that person, and the particular place has not been specified. Accordingly, the transition setup specifies that a grammar for recognizing place names should be made active.

As explained above, an advantage provided by the present technique is that prompt generation and selection is separate from the state logic of the application program. Accordingly the prompt suggestions represented in the fourth column 228 of Figure 5 are provided for guidance only and may differ in dependence upon a customisation which determines the prompts and the prompt selection rules.

According to the present technique the states of the application program and the transitions between those states are expressed and specified in the form of a mark up language which has been designed and developed in order to specify the states of an application program. From the state specification described by the mark up language, code is generated which when executed at run time forms the state machine 104 shown in Figure 2.

### User Interface Mark-up Language

The service logic, as described by a dialog flow, may be implemented using an XML-based service description language. Prompt selection logic on the other hand is specified separately from dialog flow, and may also be implemented using an XML-based language. The service logic in this case is specified as a set of dialogs, or forms, each of which has a set of slots, which can be filled. For example, a dialog for composing a voice message might have a slot for the name of a recipient and another slot for the importance of the message. Within each form, the mark-up language describes a set of situations, where each situation represents a different combination of slots to be filled within the form, along with possible events that may occur during the execution of the form. For each situation there may be a prompt to be played, an action that may be performed, and a transition to a new state of the service logic that may take place. Therefore, for the example illustrated in Figures 3 and 4, the form state corresponds to the "call" state 202, so that within the form "call", states are identified as illustrated in Figure 4.

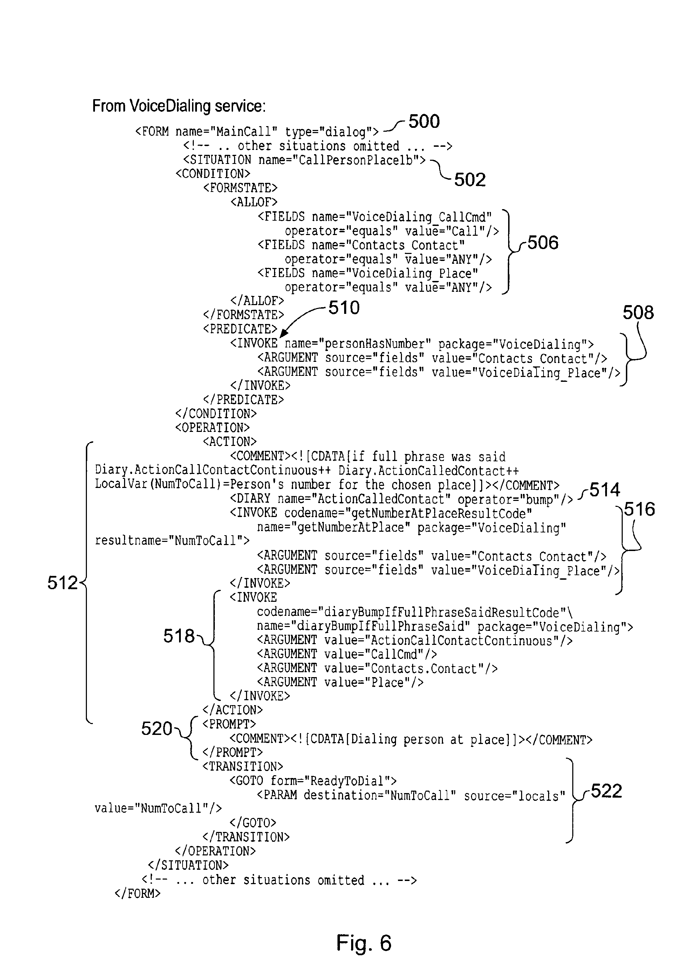

The prompt selection portion of a service customisation may be specified as a set of rules, there being one or more rules for each situation that appears in the dialog of the corresponding service. Each rule may consist of a situation identifier (as illustrated for example in Figure 4 and 5), a predicate, and a prompt sequence. The prompt sequence may mix static and dynamic (i.e. data dependent) prompts. Where it is desired to provide the same prompt every time a particular situation arises, then there will be one rule for the corresponding situation identifier and there will be a blank predicate. However, if it is desired to vary the prompt depending on session context, then multiple rules will be provided, each one with a different predicate. Figure 6 illustrates a form of a mark-up language which will be referred to as a user interface description mark-up language (UIML) provided for the state within the form "call", the state concerned being the call: <person> <place> ID corresponding to row 214.1 in Figure 5. As shown in Figure 6 the first level form description identifies the FORM name as "MainCall" having a type "dialog" 500. The Form state is a combination of slots that are filled, and the values with which those slots are filled.

Within the FORM there is a SITUATION referred to as the situation ID "CallPersonPlace.1B" 502. The table shown in Figure 5 is provided as a tool for describing in a more user friendly way what is represented by the mark-up language code fragment shown in Figure 6.

Within the SITUATION element there is a set of logical CONDITIONS for executing the form state call: <person> <place> which are provided by the logical operators within the ALLOF form state 506. However, in order to perform an ACTION required by the class then certain preconditions have to be satisfied. These preconditions are defined by a PREDICATE element 508. The PREDICATE element 508 invokes a command 510 which determines whether a person has the contact number recognised by the person and place argument. If the person does have the number which is identified for the person at the given place, then the PREDICATE is evaluated as true and the state proceeds to the ACTION element 512 in order to execute the action concerned. For the present example, this is to call the person recognised by the voice dialling package. However within the ACTION states there is provided a DIARY command to determine whether the user has called a contact specified as person place before. The diary is used to record a user's interactions with the application program, which in turn may be used by service and prompt selection logic to influence the manner of future interactions. That is the diary can then be used to select a different type of prompt in dependence upon previous actions taken by the user. This is provided by a DIARY command 514 and a command which retrieves the number at the place command 516.

A further action is also taken from the commands provided by an INVOKE element 518 to update a number of times which the voice dialling has been executed for the given call prompt act. At step 520 a PROMPT is generated by requesting the prompt selection engine to produce a prompt indicating that the application program is about to call a number. Thereafter a TRANSITION state is reached 522 which includes a command GOTO "ready to dial" indicating the transition to the ready to dial state as is correspondingly reflected in Figure 5.

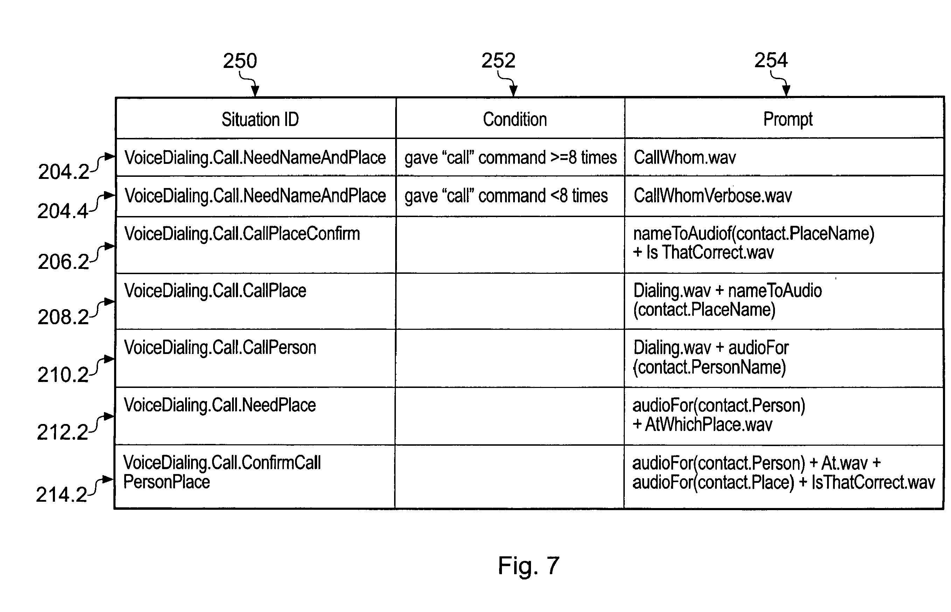

As mentioned above, the prompt generation and prompt selection is separated from the state specification. Figure 7 provides a table which, for each of the states within the "call" state example illustrated in Figures 4 and 5, specifies a situation ID in a first column 250, a condition for the prompt to be selected in a second column 252, and in a third column an identifier of the prompt which is to be generated 254. For the first column state example, which is the call: <empty> state 204, two prompt possibilities are given in the first two rows 204.2 and 204.4. These correspond to the situation where both a name and a place are needed and so the situation ID corresponding to the situation ID shown in Fig. 5 is "VoiceDialling.Call.NeedNameAndPlace". If the call command has been given more than eight times, as specified in the condition column 252, then the prompt requested is "CallWhom.wav'': This provides a relatively short prompt asking the user which person to call. Thus if the user has used the service often then only a short prompt is required. However, if the call command has been used less than eight times, as specified in condition column 252, then the prompt requested is 204.4 which selects the prompt "CallWhomVerbose.wav". This provides, in a more verbose way, a prompt for the user to specify a person and a place to call. Accordingly, it will be appreciated that the prompt can be selected in dependence upon certain conditions, including for this example the number of times the user has used the call command.

Corresponding examples are given for each of the situation IDs provided in the first column 250 which corresponds to situation IDs presented in the third column of Figure 5. Accordingly for each situation ID at least one prompt is specified.

### Prompt Selection at Run-Time

According to the present technique the prompt selection and rules pertaining to the prompt selection are specified in accordance with a situation based prompt mark-up language. The situation based prompt mark-up language defines a prompt to be selected for a given state (situation ID) of the application program in accordance with conditions for selecting that prompt as defined by the prompt rules. From the situation based mark-up language code is generated, such as Java code, for execution at run time by the prompt selection engine 220 shown in Figure 2. As such, at run time the prompts are selected in a separate and disassociated way from the state machine which merely determines whether conditions for changing from one state to another have been satisfied. As such the separation of the prompts and the prompt selection rules from the state machine is provided which allows a designer to customise a particular service to a particular need such as style, formality, gender and language.

An example sequence for invoking prompt selection at run time may include the following steps:
1) The user utters a command phrase, or some other event, such as a called party hanging up the phone, occurs;
2) Based upon the slots of a dialog form which have been filled, and based on external events which have occurred, a current situation is determined;
3) A set of one or more rules corresponding to the current situation are identified;
4) For each of the set of rules, the corresponding predicates are checked to determine a "winning" rule;
5) The prompt sequence for the winning rule is analysed in order to construct a list of audio file names (or text strings for text-to-speech generation);
6) A page of mark-up language to be transmitted to a client device is generated, the generated page including inserted prompts based on the list of audio file names.

### Service Blending

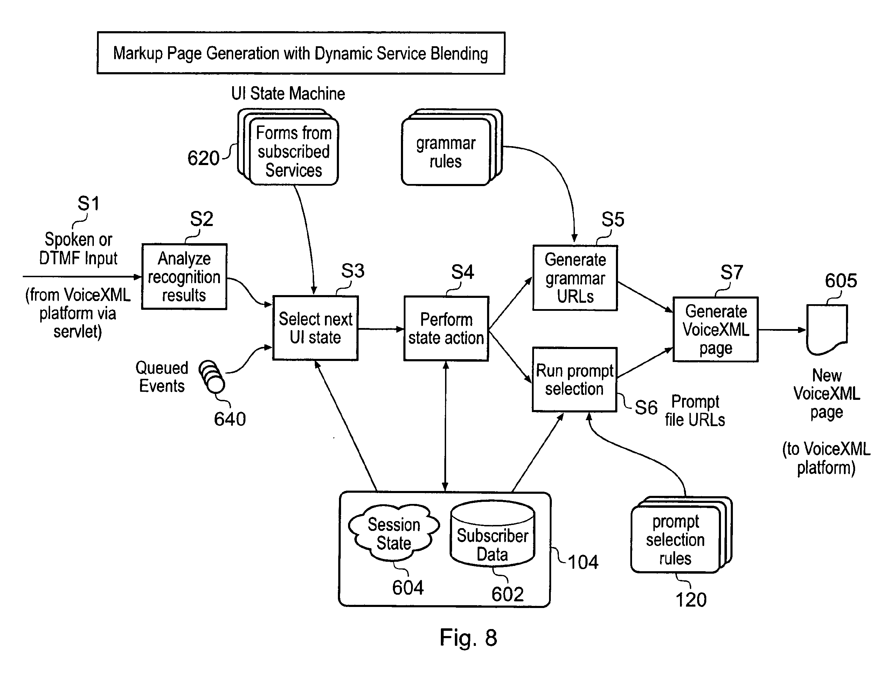

The application program may comprise only a single service, or may comprise a collection of services. In general, each service will deliver some set of related features to a user. In either case, the service or services provided by the application program may include customisations. As described above with reference to Figure 6, each service may be represented in a mark-up language by one or more forms, each form representing a group of possible states. The selection process for state transitions between different states in a form, or between a state in one form and a state in another form in response to user commands is described schematically in Figure 8. The selection process commences at a step S1 where a user spoken input is received at the speech applications server 10 from the VoiceXML platform 30. The received speech input is then analysed by the speech applications server 10 at a step S2. The speech input analysis may be carried out by the command recognition engine 126. and may result in an identification of a specific command. At a step S3, the identified command is used in combination with the state machine engine 134 and a number of other factors to determine a next state within the state machine service logic 104. The other factors involved in the selection of a next state include forms from subscribed services 620 to which the user is currently subscribed. At a step S4, a state action associated with the selected next state is performed. The state action may include interaction with external data via the data access layer 112 and also interaction with subscriber data 602 and the session state logic 604 within the state machine service logic 104. At a step S5, grammar URLs are generated for the state action determined at step S4, which identify the grammar for possible responses from the user. In addition for the particular state identified in step S3 for which a state action was identified in step S4, prompt selection rules are run in step S6, which are acquired for the state from the prompt selection rules 120. From the grammar URLs and the identified prompts a VoiceXML page 605 is generated at step S7 by the presentation generator 132, to produce a new VoiceXML page associated with the newly selected state. The new VoiceXML page is then sent to the VoiceXML platform 30 via the web server 100.

The subscribed services 620 will include at least a base service which represents the minimum basic functionality of the application program, and may also include one or more additional services representing additional functionality. The subscribed services 620 can be separately installed, removed and customised prior to run-time, and during run-time will determine a coherent set of service logic.

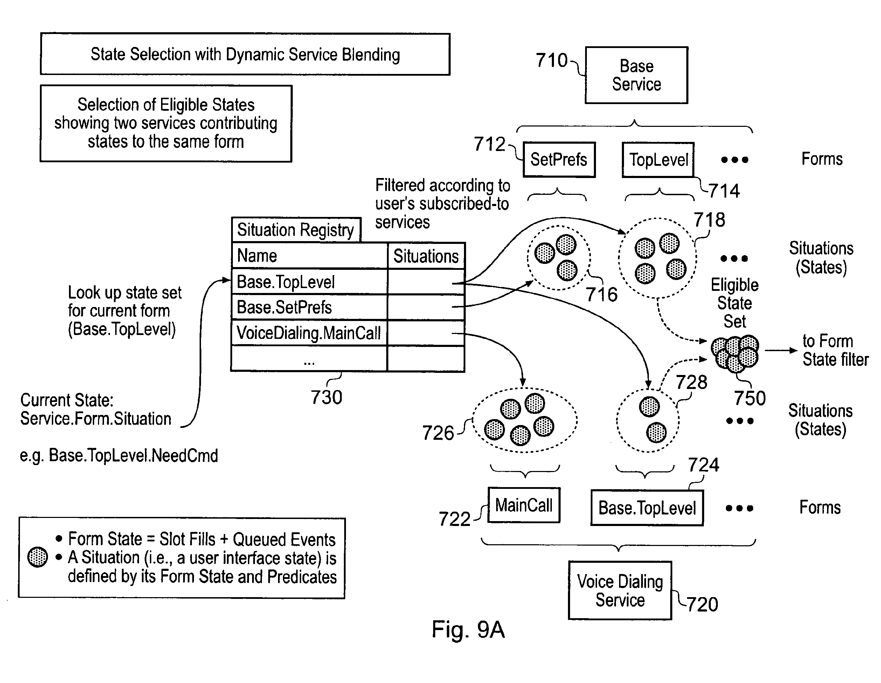

Figure 9A schematically illustrates a process for the selection of states from separate services to define the service logic navigable by a user in terms of a set of eligible states. In the example of Figure 9A, two services - a "Base Service" 710 and a "Voice Dialling Service" 720 are shown to contribute states to the same form. A situation registry 730 is provided and defines, for each form within each service (in this case the base service 710 and the voice dialling service 720), the situations (states) present within the form. In this example the base service 710 includes a "SetPrefs" form 712 and a "TopLevel" form 714. The SetPrefs form 712 includes a group of states 716 for setting user preferences within the application program. The TopLevel form 714 includes a group of states 718 representing a main menu which may for instance allow a user to select which service they wish to interact with and may define base service operations which can be performed from the main menu position within the service logic.

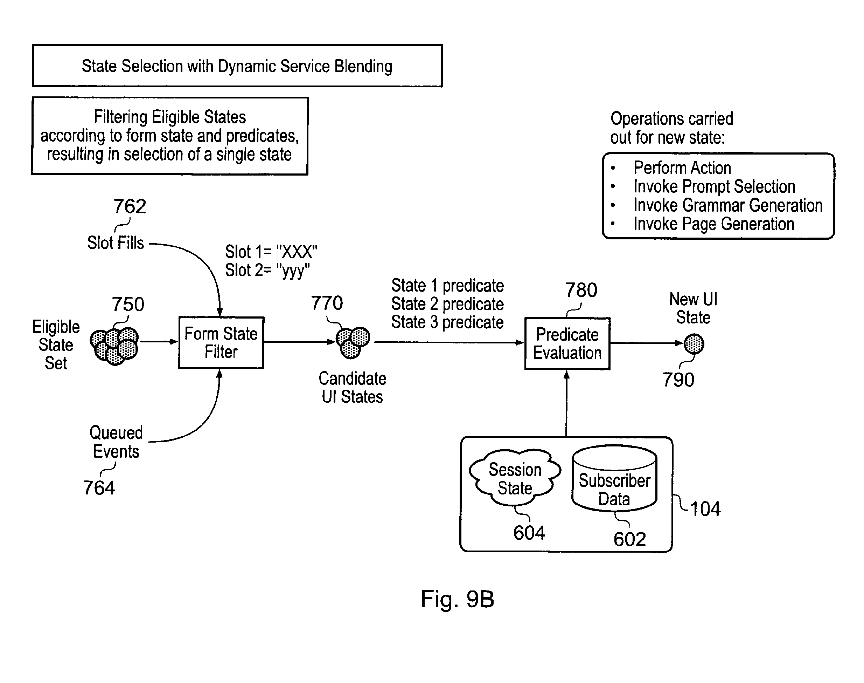

The voice dialling service 720 includes a "MainCall" form 722 and a "Base.TopLevel" form 724. The MainCall form 722 includes a group of states 726 for enabling a user to initiate a voice call to a third party. The Base.TopLevel form includes a group of states 728 to be combined with the TopLevel form states 718 of the base service 710. In other words, the Base.TopLevel form 724 constitutes a modification to a form within another service, in this case the TopLevel form 714 within the base service 710. The forms and corresponding situations within the situation registry 730 are filtered according to the services to which a current user is subscribed to generate an overall eligible list of states. The group of states 726 within the MainCall form 722 of the voice dialling service 720 are self contained within the present example and do not directly combine with any states within the base service 710. Accordingly, the group of states 726 can be passed to a Form State Filter to define part of the service logic as a discrete group. The same applies to the SetPrefs form 712 within the base service 710. In contrast, the group of states 728 within the Base.TopLevel form 724 of the voice dialling service 720 are arranged to be combined with the group of states 718 within the TopLevel form 714 of the base service 710 to define a modified TopLevel form comprising the eligible state set 750. The eligible state set 750 therefore comprises both state set 718 and state set 728. In general, when additional services are provided, the TopLevel menu of the base service will be adapted in this way to provide the user with access to the functionality of the additional services. The eligible state set 750 is then passed on to a Form State Filter described below with reference to Figure 9B. In an alternative embodiment, states within a service can be removed or replaced with a state from another service during the eligible state selection process.

A filtering process for an eligible state set 750 generated in accordance with Figure 9A is schematically illustrated in Figure 9B. The eligible state set 750 is input to a Form State Filter 760 in which the eligible states define a form. The Form State Filter 760 in response to the receipt of data 762 filling one or more slots within the form and in response to any currently queued events 764 generates a set of candidate user interface states 770, these being a subset of the eligible state set 750. The candidate user interface states 770 are then passed to a predicate evaluator 780. The predicate evaluator 780 also receives predicates relating to the candidate user interface states 770 and relevant subscriber data 602 and session state information 604 from the state machine engine 104. The predicate evaluator 780 will determine whether the predicate for each candidate user interface state is true using the session state information 604 and the subscriber data 602. Where the predicate evaluates to true for only one of the candidate user interface states 770, that state will be set as the new current user interface state 790. Where the predicate evaluates to true for more than one of the candidate user interface states 770, one of these states must be selected as the new current user interface state 790. This state can be selected for instance by making the first state for which the predicate evaluates as true to be made the new current user interface state 790.

Once a new current user interface state 790 is selected, a corresponding action may be performed, and prompt generation, grammar generation and page generation can be invoked.

In addition to updating the service logic 104 on the introduction of a new service, the command recognition grammars 126 may also be updated to include new commands and conditions. By modifying the service logic 104 and command recognition grammars 126, a new service can accomplish several things, including adding new commands to the set of valid commands, overriding the handling of existing commands, handling new events, and overriding the handling of existing events.

### Service Desiitn and Development

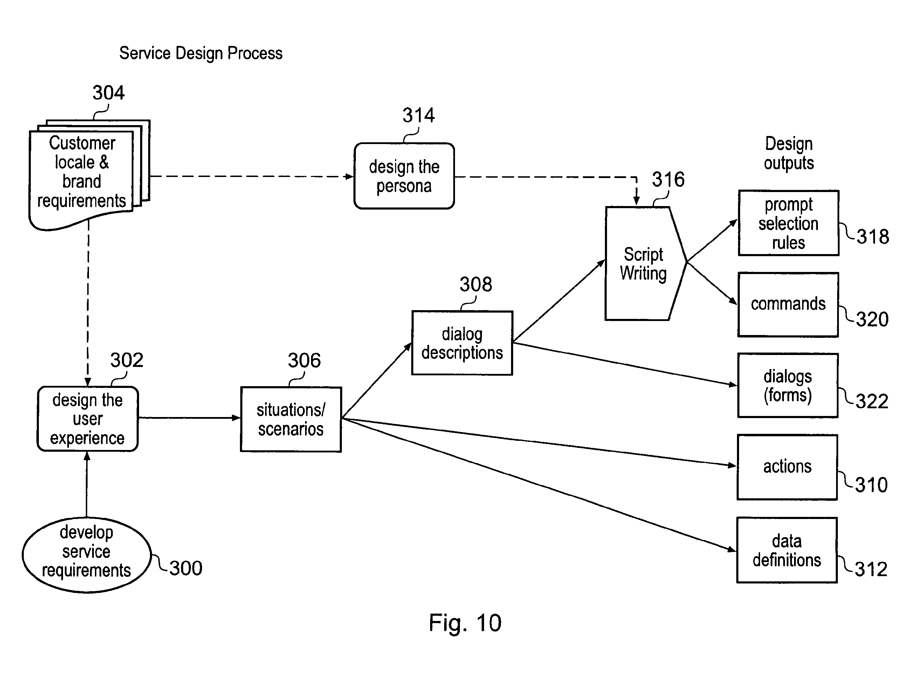

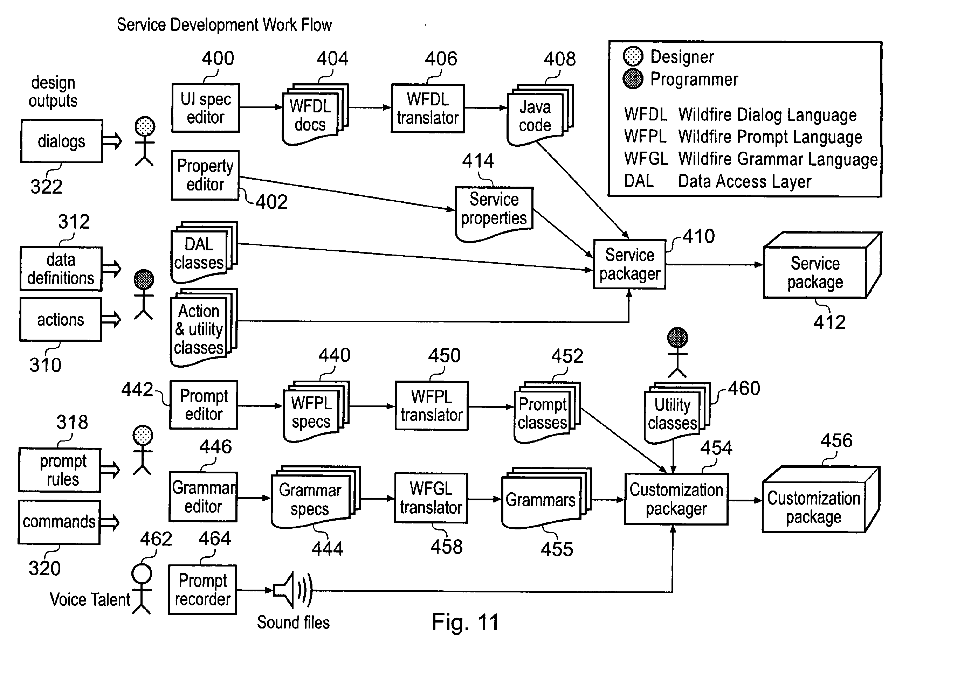

In order to appreciate the advantages provided by the present technique, a general process for design and deployment of a service is illustrated in Figures 10 and 11. Figure 10 provides an illustration of a design process for a service and includes requirements for customisation based upon style, gender or language, or indeed customer or corporate brand requirements. In Figure 10 requirements for the service development 300 are defined which serve to identify the design of the user experience 302. As illustrated, the design of the user experience 302 is influenced by customer locale and brand requirements 304. From the service requirements in combination with the required user experience, situations and scenarios are identified 306 from which dialogue descriptions for the service prompts 308 are defined along with actions to be taken 310 and data definitions 312 which are required in order to provide the voice activated service.

The customer locale and brand requirements 304 also influence the design of the persona of the audio prompts which are generated for the user in order to provide the voice activated service. From the design of the persona 314, in combination with the dialogue description 308, a script writing process 316 identifies the prompts and commands which are required from the user and from which the design inputs are produced for the prompt selection rules 318 and commands from the user which are to be used to activate the tasks 320. Dialogs or forms defining the situations or states of the application program are also defined from the dialogue descriptions 308.

As illustrated in Figure 11 the dialogs 322, the data definitions 312 and the actions 310 are input in order to develop the state machine of the application program. The dialogs serve to define the user interface specification which may be facilitated by a user interface specification editor 400 and a property editor 402. The user interface specification editor defines the state mark-up language documents 404, which are translated by a translator 406 into Java code 408. The Java code 408 is then input to a service packager 410 which serves to generate the service package 412 for defining the state machine of the application program. Similarly for the property editor 402, service properties are defined 414 which are input to the service packager 410 and then the service package 412. The data definitions 312 serve to define the data access layer classes which input to the service packager 410 for developing the service package 412. Correspondingly, the actions 310 are used to define action and utility classes for input to the service packager 410.

The prompt selection rules 318 and the commands 320 are input to develop the customisation package for the application program. The prompt rules 318 serve to identify to the service designer the prompts and the prompt selection rules which are specified in the prompt selection based mark-up language 440 as specified by a prompt editor 442 controlled by the service designer. The commands 320 serve to define the command recognition specifications 444 which are developed in accordance with the design using a command recognition editor 446.

The rule mark-up language is then translated by mark-up language translator 450 into prompt selection classes 452 which are then used by customisation packager 454 to define the customisation package 456. Also used by the customisation packager are the user commands to be recognised 455 and utility classes 460. These components are combined by the packager into a single physical package by the customisation packager. Finally the prompts themselves are generated by a voice talent which are recorded by a prompt recorder 464 and input to the customisation packager to produce the customisation package 456 to be applied to the service to be deployed.

Various modifications may be made to the embodiments herein before described without departing from the scope of the present invention. It will be appreciated that an aspect of the present invention is a computer program, which when used to control an applications server carries out the methods described herein.

## Claims

1. A speech applications server operable to provide a user driven service in accordance with an application program, the application program being arranged to provide the service in response to user commands for selecting service options, the user commands being prompted by audio prompts, the application program comprising
at least one state machine operable by a state machine engine to determine a state of the application program from one of a predetermined set of states defining a logical procedure through the user selected service options, transitions between states being determined in accordance with logical conditions to be satisfied in order to change between one state of the set and another state of the set, the logical conditions including whether a user has provided one of a set of possible commands, and
a prompt selection rule set operable by a prompt selection engine to generate the audio prompts for prompting the commands from the user in accordance with predetermined rules, wherein the prompt selected by the prompt selection engine is determined at run-time.

2. A speech applications server as claimed in Claim 1, comprising a command recognition engine, the command recognition engine including a speech recogniser, the speech recogniser being operable to provide the command recognition engine with the set of possible user commands which may be received from the user with respect to the logical condition for changing from a current one of the predetermined set of states to another of the states of the state machine, the command recognition engine being operable
to analyse commands provided by the user with respect to the set of possible commands provided by the speech recogniser, and
to provide the state machine with an estimate of one of the set of possible commands which the user provided, the state machine being operable to change state in response to the estimated user command:

3. A speech applications server as claimed in Claim 2, wherein the command recognition engine is operable to determine a confidence level for the estimated user command, the state machine identifying the change of state from the estimated user command in combination with the determined confidence level.

4. A speech applications server as claimed in Claim 3, wherein the user commands include voice commands, the speech recognition processor being operable to generate the confidence levels for the estimate of the possible voice commands.

5. A speech applications server as claimed in any preceding claim, wherein the application program is operable to generate a mark-up language page in accordance with a current state of the application program as determined by the state machine, the mark-up language page including universal resource locations (URLs) defining a location for data files providing the audio prompts, the speech grammars, and the DTMF grammars.

6. A speech applications server as claimed in Claim 5, wherein the mark-up language is VoiceXML.

7. A speech applications server as claimed in any preceding Claim, wherein the state machine is defined using a mark-up language, the mark-up language including
a form instruction for defining a set of the possible states of the application program within a dialog form, each form state including at least one situation identifier for identifying at least one current state and a logical condition for changing to the following state, and a request to the prompt selection engine to generate a request for a user command for satisfying the logical condition for the application program to change to the following state.

8. A speech applications server as claimed in any preceding Claim, wherein the prompt selection rule set is defined using a mark-up language, the mark-up language defining the set of possible prompts which may be provided to a user for one of the set of states of the state machine.

9. A speech applications server as claimed in any of Claims 2 to 8, wherein the command recognition grammars are specified using a mark-up language.

10. A speech applications server as claimed in Claim 7, 8 and 9, wherein the application program is formed by translating the mark-up language for the state machine and the mark-up language for the prompt selection rule sets into executable code, the executable code being operable to generate the VoiceXML mark-up language, which when communicated to a telephony platform provides the user driven service.

11. A speech applications server as claimed in any preceding claim, comprising a web server operable to receive the mark-up language page and to deploy separately the mark-up language page to a telephony platform.

12. An application program operable to provide a user driven service in response to user commands for selecting service options, the user commands being prompted by audio prompts, the application program comprising
at least one state machine operable by a state machine engine to determine a state of the application program from one of a predetermined set of states defining a logical procedure through the user selected service options, transitions between states being determined in accordance with logical conditions to be satisfied in order to change between one state of the set and another state of the set, the logical conditions including whether a user has provided one of a set of possible commands, and
a prompt selection rule set operable by a prompt selection engine to generate the audio prompts for prompting the commands from the user in accordance with predetermined rules, wherein the prompt selected by the prompt selection engine is determined at run-time.

13. An application program as claimed in Claim 12, wherein the state machine is responsive to an estimate of one of the possible commands which the user may have provided in accordance with the logical condition for changing from a current one of the predetermined set of states to another of the states of the application program to change to the other state, the estimate of the user command being provided by a command recognition engine, the command recognition engine including a speech recogniser, the speech recogniser being operable to provide the command recognition engine with the set of possible user commands which may be received from the user with respect to the logical conditions for changing from the current state to the other state, the command recognition engine being operable to analyse the user commands with respect to the possible set of user commands which the user may have provided, wherein the state machine is operable to change state in response to the estimated user command in combination with the logical condition associated with the change of state.

14. An application program as claimed in Claim 13, wherein the state machine is operable to identify the change of state from the estimated user command in combination with a determined confidence level, the determined confidence level being provided by the command recognition engine.

15. An application program as claimed in Claim 14, wherein the user commands include voice commands, the speech recognition processor being operable to generate the confidence levels for the estimate of the possible voice commands.

16. A system for providing a user driven service, the system comprising an applications server, a telephony platform and a user equipment,
the speech applications server being operable to provide a user driven service in accordance with an application program, the application program being arranged to provide the service in response to user commands for selecting service options, the user commands being prompted by audio prompts, the application program comprising
at least one state machine operable by a state machine engine to determine a state of the application program from one of a predetermined set of states defining a logical procedure through the user selected service options, transitions between states being determined in accordance with logical conditions to be satisfied in order to change between one state of the set and another state of the set, the logical conditions including whether a user has provided one of a set of possible commands, and
a prompt selection rule set operable by a prompt selection engine to generate the audio prompts for prompting the commands from the user in accordance with predetermined rules, the telephony platform being operable
to receive data representing the audio prompts from the applications server, and
to communicate the audio prompt data to the user equipment, and
to receive data representative of the possible commands from the user equipment, and
to communicate the possible commands to the applications server, wherein the prompt selected by the prompt selection engine is determined at run-time.

17. A method for providing a user driven service, the service being provided in response to user commands for selecting service options, the user commands being prompted by audio prompts, the method comprising
determining a state of the application program from one of a predetermined set of states defining a logical procedure through the user selected service options, transitions between states being determined in accordance with logical conditions to be satisfied in order to change between one state of the set and another state of the set, the logical conditions including whether a user has provided one of a set of possible commands, and
generating the audio prompts for prompting the possible commands from the user in accordance with predetermined rules, wherein the prompts are generated at run-time.

18. A method as claimed in Claim 17, comprising
analysing the user commands with respect to the possible set of user commands which the user may have provided, the possible set of the user commands being determined in accordance with the logical condition for changing from a current one of the predetermined set of states to another of the states to which the state machine may change,
estimating of one of the possible commands which the user provided, and
changing state in response to the estimated user command in combination with the logical condition associated with the change of state.

19. A method as claimed in Claim 18, comprising
determining a confidence level for the estimated user command, the state machine identifying the change of state from the estimated user command in combination with the determined confidence level.

20. A method as claimed in Claim 19, wherein the user commands include voice commands, the generating the confidence levels for the estimate of the voice command, the possible user commands being possible voice commands.

21. An extended mark-up language for defining a user driven service, the user driven service being provided in response to user commands for selecting service options, the user commands being prompted by audio prompts, the mark-up language comprising
a form instruction for defining a set of possible states of the service in a dialog form, each form including at least one situation identifier for identifying at least one current state and the logical condition for changing to that state, and a prompt request to generate a request for a user command for satisfying the logical condition for changing to a following state.

22. An extended mark-up language as claimed in Claim 21, wherein each of the identified situations within a form is identified by a possible combination of slots corresponding to one of the set of possible commands associated with the situation, and the prompt request is arranged to prompt for the user commands to fill the slots for a set of possible following states.

23. An extended mark-up language as claimed in Claim 21 or 22, wherein each of the identified situations within a form is further identified by a Boolean expression corresponding to logical conditions necessary for the situation to be selected as the current one.

24. An extended mark-up language as claimed in Claim 21, 22, or 23, wherein each identified situation includes a suggested prompt to be played, an action to be performed, and instructions for setting up the transition to a possible new set of states.

25. An extended mark-up language as claimed in Claim 21, 22, 23, or 24, wherein the prompt request is associated with one or more rules, each rule consisting of the situation identifier, a predicate defining preconditions for executing the prompt request and a prompt sequence.

26. A computer program which when loaded on to a data processor causes the data processor to perform a method for providing a user driven service, the service being provided in response to user commands for selecting service options, the user commands being prompted by audio prompts, the method comprising
determining a state of the application program from one of a predetermined set of states defining a logical procedure through the user selected service options, transitions between states being determined in accordance with logical conditions to be satisfied in order to change between one state of the set and another state of the set, the logical conditions including whether a user has provided one of a set of possible commands, and
generating the audio prompts for prompting the possible commands from the user in accordance with predetermined rules, wherein the prompts are generated at run-time.

27. A data carrier bearing information signals representative of the computer program as claimed in Claim 26.
